# EUROPEAN PATENT SPECIFICATION

(11) **EP 2 074 169 B1**
(45) Date of publication and mention of the grant of the patent: **13.07.2011**
(21) Application number: 07821123.2
(22) Date of filing: 10.10.2007
(51) Int. Cl.: C08K 9/02

(54) **PACKING ELEMENTS FOR EVAPORATIVE COOLERS WITH RESISTANCE TO BIOFILM FORMATION**
PACKUNGSELEMENTE FÜR VERDAMPFUNGSKÜHLER MIT BESTÄNDIGKEIT GEGENÜBER BIOFILMBILDUNG
ELEMENTS D'EMBALLAGE POUR REFROIDISSEURS EVAPORATIFS PRESENTANT UNE RESISTANCE A LA FORMATION DE BIOFILMS

(30) Priority: 19.10.2006 US 852826 P
(43) Date of publication of application: 01.07.2009
(73) Proprietor: BASF SE, 67056 Ludwigshafen (DE)
(72) Inventor: REYES, Melinda, Morris Plains, New Jersey 07950 (US)
(86) International application number: PCT/EP2007/060755
(87) International publication number: WO 2008/046771

(56) References cited:
- EP-A- 0 333 118
- EP-A- 1 190 622
- WO-A-00/52088
- US-A- 5 556 618
- US-A1- 2004 147 654

## Description

This invention relates to plastic polyvinyl chloride packing for evaporative coolers, for example water cooling towers. The polyvinyl chloride packing exhibits outstanding resistance to biofilm formation.

A wide variety of industries use water as the coolant for heat transfer processes. A significant quantity of cooling water is used annually by both electrical power plants and manufacturing operations. Typical water cooled heat transfer processes include condensers and chillers. In general, the spent water is recycled to lessen both the economic and environmental impact of these heat transfer processes. This recycling requires the spent water to be cooled back to ambient temperature or slightly below, commonly by means such as a cooling tower. In general, cooling towers allow the spent water to release heat to the ambient air by cascading the spent water down an open air tower.

The packing material for use in the cooling towers comprises a suitable inert material arranged to present as large as possible a surface area to contact the gas and liquid flowing therepast. Such packing material may comprise, for example, a supported mass of irregular or regular shaped pieces, offering a large surface area to bulk ratio, over and through which the gas and liquid are cause to flow in counter current. The packing may take the form of a number of rigid grid-like structures arranged in superimposed spaced relation to one another, which arrangement is designed to break up and distribute the liquid falling freely through the tower so that maximum contact is established with the gas flowing upwardly through the tower and optimum cooling is achieved.

Packing materials are comprised of for example metal, wood or plastic such as polyvinyl chloride.

The packings surfaces are subject to fouling by microbe contamination. In particular, the surfaces are subject to a type of fouling known as biofilm formation. "Biofilm" means a mucilaginous community of mocroorgainisms such as, for example bacteria, archaea, fungi, molds, algae or protozoa.

Biofilm formation on evaporative cooler packing surfaces can result in a loss of heat exchange performance or corrosion of the surface. Biofilm formation also provides for a tacky surface on which minerals can readily deposit.

There remains a need for polyvinyl chloride packing material that is resistant to biofilm formation.

Packings for water cooling towers are disclosed in for example U.S. Pat. No. 4,762,650.

Packing, or contact packing, for cooling towers is also disclosed in U.S. Pat. No. 4,105,724.

U.S. Pat. No. 4,361,426 teaches packing, or fill, for cooling towers. The fill has a high surface area.

U.S. Pat. Nos. 6,071,542, 4,938,955, 4,775,585, 4,911,899 and 4,911,898 are aimed at resins containing antimicrobial metal containing zeolites.

U.S. Pat. No. 6,585,989 teaches metal containing zeolites and supported on silicon dioxide, titanium dioxide or glass.

Published U.S. app. No. 2004/0082492 is aimed at biocide-containing plastics internal elements in gas humidifiers, gas scrubbers or exhaust air scrubbers.

It has been found that polyvinyl chloride packing materials that have incorporated therein antimicrobial metal containing zeolites or supported silver compounds are especially resistant to biofilm formation. The polyvinyl chloride packings exhibit good visual appearance and good heat exchange performance over a long period of time.

Disclosed is a polyvinyl chloride packing material for evaporative coolers,

which packing material has incorporated therein an amount effective to prevent biofilm formation of one or more antimicrobials selected from the group consisting of the metal containing zeolites and the supported metals,
where the metal of the metal containing zeolites is silver, copper, zinc, mercury, tin, lead, bismuth, cadmium, chromium, cobalt, nickel, zirconium or a combination of two or more of these metals and
where in the supported metals the metal is silver, a silver compound a silver complex or a combination of silver with copper, zinc or zirconium and where the support is SiO₂, TiO₂ or glass.

Evaporative coolers may be used for cooling a gas such as air using a liquid such as water as a coolant, or for cooling a liquid using a gas as a coolant, and/or for humidifying a gas. Included are water cooling towers, exhaust air scrubbers, flue gas scrubbers or humidifiers of process gases. Each of these systems according to this invention employ polyvinyl chloride packing.

Such coolers are disclosed for example in U.S. Pat. Nos. 4,762,650, 4,297,224, 4,361,426 and 6,649,065 and in published U.S. app. No. 2004/0082492. The coolers of this invention are in particular water cooling towers. Where the cooling towers of the cited art employ a different packing material, for example wood or metal, the present invention would substitute polyvinyl chloride.

The polyvinyl chloride packing material, also known as fill, is disclosed for example in U.S. Pat. Nos. 4,105,724, 4,361,426 and 4,311,593. The polyvinyl chloride (PVC) packing may be in the form of blocks or bundles, for example corrugated PVC assembled into self supporting modules. The PVC packing may be in the form of cellular material. The PVC packing has a large surface area upon which biofilm may form.

A biofilm is a type of fouling that occurs when microorganisms attach to surfaces and secrete a hydrated polymeric matrix that surrounds them. The microorganisms in a biofilm grow in a protected environment that insulates them from antimicrobial agents. A biofilm may be formed from lower plant life, for example algae, bacteria or fungi. A biofilm may damage PVC packing material in an evaporative cooler. Cooling water systems are excellent places for the incubation and growth of biological organisms because such systems contain nutrients from air drawn into the system and from organic materials naturally occurring in the water. Further, the water temperature is warm enough to prove an ideal incubation environment.

Biofilm formation may cause problems with water and air flow, oil fouling, mineral deposition and/or microbiological fouling.

The damage cause by a biofilm may be measured as disclosed in U.S. Pat. No. 4,297,224. For example, it may be measured by appearance, microorganism count, microscopic analysis or by heat transfer. Heat transfer, or temperature differential, across a cooling tower or heat exchanger quickly defines the existence of fouling problems where a noticeable reduction in heat transfer is observed.

The metal containing zeolites are disclosed in for example in U.S. Pat. Nos. 6,585,989, 6,071,542, 4,911,899, 4,775,585, 4,938,955 and 4,911,898.

A zeolite is generally aluminosilicate having a three dimensional grown skeleton structure and is generally represented by xM_{2/n}O·Al₂O₃·ySiO₂·zH₂O, written with Al₂O₃ as a basis, wherein M represents an ion-exchangeable metal ion, which is usually the ion of a monovalent or divalent metal; n corresponds to the valence of the metal; x is a coefficient of the metal oxide; y is a coefficient of silica; and z is the number of water of crystallization. The zeolites of the present invention have a specific surface area of at least 150m²/g.

Antimicrobial metals for use in the metal containing zeolites include silver, copper, zinc, mercury, tin, lead, bismuth, cadmium, chromium, cobalt, nickel, zirconium or a combination of two or more of these metals. Preference is given to silver, copper, zinc and zirconium or a combination of these. Especially preferred metals are silver alone or a combination of silver with copper, zinc or zirconium.

The present metal containing zeolites include surface modified metal containing zeolites according to U.S. Pat. No. 6,071,542.

The supported metals are supported on SiO₂, TiO₂ or glass. The metal in this instance is silver, a silver compound a silver complex or a combination of silver with copper, zinc or zirconium. Included within silver compounds or silver complexes are colloidal silver, silver nitrate, silver sulphate and silver chloride.

A preferred support is glass.

The present metal containing zeolite or supported metal antimicrobials are present in the PVC at a level of from 0.01% to 10% by weight, based on the weight of the PVC. For instance, the present antimicrobials are present from 0.05% to 5% by weight, or from 0.1 % to 3% by weight, based on the weight of the PVC.

The present metal containing zeolite or supported metal antimicrobials are incorporated into the PVC packing for example prior to its formation into the final article, for example via melt blending. The antimicrobial additives are incorporated into the PVC for example during melt extrusion.

The antimicrobials may be dry mixed with PVC in the form of a powder or may be wet mixed in the form of solutions or suspensions. The antimicrobials may be incorporated into the PVC before or after molding or also by applying a dissolved or dispersed mixture to the plastic material, with or without subsequent evaporation of the solvent. The antimicrobials may be added to the PVC in the form of a masterbatch which contains the additives in a concentration of for example 2% to 70% by weight. In such operations, the polymer can be used in the form of powder, granules, solutions, suspensions or in the form of lattices. The antimicrobials can be added before, during or after polymerization.

The following examples illustrate the invention.

### Example 1 Oil Refinery Cooling Tower

Cooling tower contained volume: 590,500 liters (156,000 gallons); circulation rate: 15,142 liters/minute (4,000 gpm); nominal cooling capacity: 12,700,000 Kcal/hr (4,200 tons); blow down: 102 liters/minute (27 gpm).

This tower contains PVC packing. The packing contains a present metal containing zeolite or a present supported metal. After operation for an extended period, the PVC packing is visually clean and free of biofilm formation.

### Example 2 Packaged Cooling Towers

Two packaged cooling towers are connected in parallel to provide the following system: contained volume: 37,800 liters (10,000 gallons); circulation rate: 7,600, liters/minute (2,000 gpm); nominal cooling capacity: 2,420,000 Kcal/hr (800 tons); blow down: 344 liters/minute (91 gpm).

The packing without a present antimicrobial additive are badly fouled with biofilm. The efficiency of the tower is significantly impacted, requiring replacement of the packing. When the PVC packing contains a present metal containing zeolite or a present supported metal additive, the packing remains clear of biofilm formation.

### Example 3 PVC Packing

Standard PVC packing is prepared. Control sample contains no antimicrobial additive. Test sample contains 1% by weight of a mixture of silver supported on glass and zinc supported on zeolite. The antimicrobial mixture is melt blended with the PVC.

The control and test samples of packing are arranged side by side in a standard water cooling tower. Weight gain is measured for the packing materials on a monthly basis. After 12 months, the control sample gains 20% weight. The test sample exhibits no weight gain after 12 months.

### Example 4 Antimicrobial Efficacy

PVC samples are prepared. The control sample contains no antimicrobial additive. The test sample contains 1% by weight of a mixture of silver supported on glass and zinc supported on zeolite. The antimicrobial mixture is melt blended with the PVC.

The samples are treated with *methicillin resistant staphylococcus aureus* (MRSA) and tested according to JIS Z 2801.

The samples are treated with *leigonella pneumophila* and also tested according to JIS Z 2801.

The samples are inoculated with the bacteria, covered with film and kept at 35°C for 24 hours. The number of viable cells of bacteria are counted. Antimicrobial activity is calculated according to R = log B/C where R = antimicrobial activity, B = average of the number of bacteria on the control samples after incuabation for 24 hours and C = average of the number of bacteria on the test samples after incubation for 24 hours.

Results are below. Antimicrobial activity R greater than 2.0 is judged to be efficacious.

Antimicrobial efficacy against *methicillin resistant staphylococcus aureus* (MRSA)

| sample | bacteria count after incubation | antimicrobial activity (R) |
|---|---|---|
| control | 6.4 E5 | |
| test | <10 | 4.8 |

Antimicrobial efficacy against *legionella pneumophila*

| sample | bacteria count after incubation | antimicrobial activity (R) |
|---|---|---|
| control | 5.7 E5 | |
| test | <100 | >5 |

## Claims

1. A polyvinyl chloride packing material for evaporative coolers,
which packing material has incorporated therein an amount effective to prevent biofilm formation of one or more antimicrobials selected from the group consisting of the metal containing zeolites and the supported metals,
where the metal of the metal containing zeolites is silver, copper, zinc, mercury, tin, lead, bismuth, cadmium, chromium, cobalt, nickel, zirconium or a combination of two or more of these metals and
where in the supported metals the metal is silver, a silver compound a silver complex or a combination of silver with copper, zinc or zirconium and where the support is SiO₂ TiO₂ or glass.

2. A polyvinyl chloride packing material according to claim 1 where the antimicrobials are present from 0.05% to 5% by weight, based on the weight of the polyvinyl chloride.

3. A polyvinyl chloride packing material according to claim 1 where the antimicrobials are present from 0.1% to 3% by weight, based on the weight of the polyvinyl chloride.

4. A polyvinyl chloride packing material according to claim 1 where the antimicrobials are selected from the group consisting of the metal containing zeolites.

5. A polyvinyl chloride packing material according to claim 4 where the metal is silver, copper, zinc, zirconium or a combination thereof.

6. A polyvinyl chloride packing material according to claim 4 where the metal is silver or is a combination of silver with copper, zinc or zirconium.

7. A polyvinyl chloride packing material according to claim 1 where the antimicrobials are selected from the group consisting of the supported metals.

8. A polyvinyl chloride packing material according to claim 7 where the metal is silver or is a combination of silver with copper, zinc or zirconium.

9. A polyvinyl chloride packing material according to claim 7 where the support is glass.

## Patentansprüche

1. Polyvinylchlorid-Packungsmaterial für Verdunstungskühler,
wobei in das Verpackungsmaterial eine zur Verhinderung der Biofilmbildung wirksame Menge eines oder mehrerer antimikrobieller Mittel aus der Gruppe bestehend aus den metallhaltigen Zeolithen und den geträgerten Metallen eingearbeitet ist,
wobei es sich bei dem Metall der metallhaltigen Zeolithe um Silber, Kupfer, Zink, Quecksilber, Zinn, Blei, Bismut, Cadmium, Chrom, Cobalt, Nickel, Zirconium oder eine Kombination von zwei oder mehr dieser Metalle handelt und
wobei es sich in den geträgerten Metallen bei dem Metall um Silber, eine Silberverbindung, einen Silberkomplex oder eine Kombination von Silber mit Kupfer, Zink oder Zirconium handelt und es sich bei dem Träger um SiO₂, TiO₂ oder Glas handelt.

2. Polyvinylchlorid-Packungsmaterial nach Anspruch 1, wobei die antimikrobiellen Mittel in einer Menge von 0,05 bis 5 Gew.-%, bezogen auf das Gewicht des Polyvinylchlorids, vorliegen.

3. Polyvinylchlorid-Packungsmaterial nach Anspruch 1, wobei die antimikrobiellen Mittel in einer Menge von 0,1 bis 3 Gew.-%, bezogen auf das Gewicht des Polyvinylchlorids, vorliegen.

4. Polyvinylchlorid-Packungsmaterial nach Anspruch 1, wobei die antimikrobiellen Mittel aus der Gruppe bestehend aus den metallhaltigen Zeolithen ausgewählt sind.

5. Polyvinylchlorid-Packungsmaterial nach Anspruch 4, wobei es sich bei dem Metall um Silber, Kupfer, Zink, Zirconium oder einer Kombination davon handelt.

6. Polyvinylchlorid-Packungsmaterial nach Anspruch 4, wobei es sich bei dem Metall um Silber oder eine Kombination von Silber mit Kupfer, Zink oder Zirconium handelt.

7. Polyvinylchlorid-Packungsmaterial nach Anspruch 1, wobei die antimikrobiellen Mittel aus der Gruppe bestehend aus den geträgerten Metallen ausgewählt sind.

8. Polyvinylchlorid-Packungsmaterial nach Anspruch 7, wobei es sich bei dem Metall um Silber oder eine Kombination von Silber mit Kupfer, Zink oder Zirconium handelt.

9. Polyvinylchlorid-Packungsmaterial nach Anspruch 7, wobei es sich bei dem Träger um Glas handelt.

## Revendications

1. Matériau de garnissage en polychlorure de vinyle pour refroidisseurs à évaporation,
lequel matériau de garnissage incorpore une quantité efficace pour empêcher la formation de biofilm d'un ou plusieurs agents antimicrobiens choisis dans le groupe constitué par les zéolites contenant du métal et les métaux supportés,
dans lequel le métal des zéolites contenant du métal est l'argent, le cuivre, le zinc, le mercure, l'étain, le plomb, le bismuth, le cadmium, le chrome, le cobalt, le nickel, le zirconium ou une association de deux ou plus de deux de ces métaux et
dans lequel dans les métaux supportés le métal est l'argent, un composé de l'argent, un complexe de l'argent ou une association d'argent avec du cuivre, du zinc ou du zirconium et dans lequel le support est SiO₂, TiO₂ ou du verre.

2. Matériau de garnissage en polychlorure de vinyle selon la revendication 1 dans lequel les agents antimicrobiens sont présents à hauteur de 0,05 % à 5 % en poids, sur la base du poids du polychlorure de vinyle.

3. Matériau de garnissage en polychlorure de vinyle selon la revendication 1 dans lequel les agents antimicrobiens sont présents à hauteur de 0,1 % à 3 % en poids, sur la base du poids du polychlorure de vinyle.

4. Matériau de garnissage en polychlorure de vinyle selon la revendication 1 dans lequel les agents antimicrobiens sont choisis dans le groupe constitué par les zéolites contenant du métal.

5. Matériau de garnissage en polychlorure de vinyle selon la revendication 4 dans lequel le métal est l'argent, le cuivre, le zinc, le zirconium ou une association de ceux-ci.

6. Matériau de garnissage en polychlorure de vinyle selon la revendication 4 dans lequel le métal est l'argent ou est une association d'argent avec du cuivre, du zinc ou du zirconium.

7. Matériau de garnissage en polychlorure de vinyle selon la revendication 1 dans lequel les agents antimicrobiens sont choisis dans le groupe constitué par les métaux supportés.

8. Matériau de garnissage en polychlorure de vinyle selon la revendication 7 dans lequel le métal est l'argent ou est une association d'argent avec du cuivre, du zinc ou du zirconium.

9. Matériau de garnissage en polychlorure de vinyle selon la revendication 7 dans lequel le support est du verre.
